# EUROPEAN PATENT SPECIFICATION

(11) **EP 0 923 840 B1**
(45) Date of publication and mention of the grant of the patent: **24.03.2004**
(21) Application number: 97902452.8
(22) Date of filing: 31.01.1997
(51) Int. Cl.: H04Q 7/32, H04Q 7/22

(54) **MOBILE ORIGINATED GROUP SHORT MESSAGE SERVICE AND APPARATUS THEREFOR**
VON MOBILEN ENDGERÄTEN ERZEUGTER GRUPPEN-KURZNACHRICHTENDIENST UND EINRICHTUNG DAFÜR
SERVICE DE MESSAGES COURTS DE GROUPE PROVENANT D'UNE UNITE MOBILE ET APPAREIL PREVU A CET EFFET

(30) Priority: 05.09.1996 GB 9618539
(43) Date of publication of application: 23.06.1999
(73) Proprietor: Orange Personal Communications Services Ltd., Bradley Stoke, Bristol BS32 4QJ (GB)
(72) Inventor: GREEN, Mark, Weston-Super-Mare, N. Somerset BS24 9XB (GB)
(74) Representative: Spaargaren, Jerome
(86) International application number: PCT/GB1997/000298
(87) International publication number: WO 1998/010608

(56) References cited:
- WO-A-92/14329
- WO-A-94/09599
- CHRISTAL P: "GSM->>Handy<< mit Top-Handling" TELCOM REPORT, vol. 16, no. 6, 1993, pages 332-335, XP000425543
- SMALE S: "HP OpenMail Short Message Service (SMS) Gateway. The Mobile Phone as an E-mail 'Client-of-Choice'" INTERNATIONAL WORKSHOP ON MOBILE MULTI-MEDIA COMMUNICATIONS, 11 April 1995, pages 1-6, XP000671022

## Description

This invention relates to mobile communications, in particular but not exclusively to cellular radio communications, such as in a GSM (Global System for Mobile communications) digital cellular radio network.

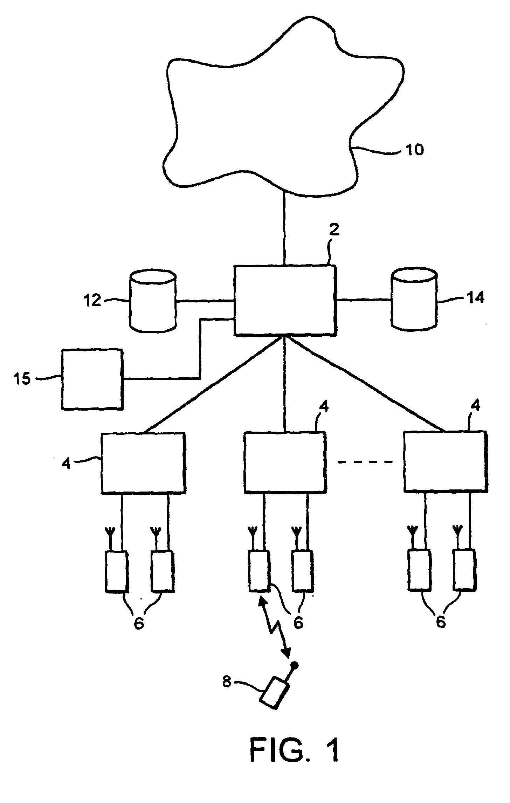

A known conventional GSM network, referred to as a public land mobile network (PLMN), is schematically illustrated in Figure 1. A mobile switching centre (MSC) 2 is connected via communication links to a number of base station controller (BSCs) 4. The BSCs 4 are dispersed geographically across areas served by the mobile switching centre 2. Each BSC controls one or more base transceiver stations (BTSs) 6 located remote from, and connected by further communication links to, the BSC. Each BTS 6 transmits radio signals to, and receives radio signals from, mobile stations 8 which are in an area served by that BTS. That area is referred to as a "cell". A GSM network is provided with a large number of such cells, which are ideally contiguous to provide continuous coverage over the whole network territory.

A mobile switching centre 2 is also connected via communications links to other mobile switching centres in the remainder of the mobile communications network 10, and to a public service telephone network (PSTN), which is not illustrated. The mobile switching centre 2 is provided with a home location register (HLR) 12 which is a database storing subscriber authentication data including the international mobile subscriber identity (IMSI) which is unique to each mobile station 8. The IMSI is also stored in the mobile station in a subscriber identity module (SIM) along with other subscriber-specific information.

The mobile switching centre is also provided with a visitor location register (VLR) 14 which is a database temporarily storing subscriber authentication data for mobile stations which are active in the area served by the mobile switching centre 2.

The GSM system, in common with other mobile communication systems, supports a variety of teleservices. One such teleservice is a speech teleservice, for supporting voice calls on a speech traffic channel. other teleservices include a short message service (SMS) which is used for transmitting alphanumeric messages in the system on a low rate data traffic channel. A user of the mobile station 8 may generate a message by input to a user interface device, and transmit the message, along with the directory number of the terminating station for the short message, to the service BTS 6. The message is forwarded to the MSC 2, which forwards the message transmitted from the mobile station 8 to a short message service centre (SC) 15, which stores the message for onward transmission to the terminating station corresponding to the directory number specified by the user of the mobile station 8.

International Patent Application No. W094/09599 describes a method for transmitting short messages in a GSM network. In order to reduce the effort and signalling load required in order to transmit a large number of short messages to a large number of terminating subscribers, a gateway MSC copies a message received via a short message service centre from the message generating mobile station to produce a large number of messages, which are then forwarded to the intended recipients.

When the gateway MSC receives a short message, it analyses the part of the message signal containing the address of the recipient to determine whether it contains the address of a single subscriber or a predefined identifier for a group of recipients. This identifier, if present, is used to access a list of directory numbers stored in the gateway MSC, which is used to determine the intended recipients of the message. The message is copied to each of those intended recipients.

In accordance with the invention, there is provided a mobile station for use in a mobile communications system, said mobile station comprising a memory for storing a plurality of recipient addresses and a message to be sent from the mobile station,
characterised in that said mobile station comprises a menu facility for selecting a group of recipient addresses from said plurality of recipient addresses, and for sending separate short messages for each member of said selected group, said short messages each containing the same message stored in said memory.

The short messages may be sent automatically in a consecutive order.

Thus, a number of short messages can be sent for each of a desired group of recipient addresses without requiring the user of the mobile station to separately select and cause the mobile station to send a message for each of the recipient addresses individually.

The group of recipient addresses may be selected from a plurality of stored predetermined groups of recipient addresses. This provides further convenience to a user, insofar as the members of the group do not need to be selected separately each time short messages are to be sent for the selected group.

The mobile station may further comprise: a group edit menu facility for allowing a user to create groups of recipient addresses; and means for storing group data relating to said groups, said group data including, for each said group, an identifier which is specified by the user.

Thus, a mobile station may have menu facilities allowing groups to be created and to be selected.

The group edit menu facility may allow a user to create a group by selecting recipient address from a stored list. The group data preferably comprises pointers to each recipient address in the group, in said list. This can reduce duplication of data where the user station is provided with such a list of recipient addresses. The group data need not include the recipient addresses in full, by referring to the addresses in the stored list.

If a recipient address is deleted from the list, the data relating to the addresses in each group will no longer be valid insofar as one of the addresses identified in the group data, if it is the deleted address, will no longer be available. The user station preferably further comprises means for searching and revising the group data relating to the deleted recipient address in response to the deletion.

Embodiments of the present invention will now be described, by way of example only, with reference to the accompanying drawings in which:
Figure 1 is a block diagram of a mobile communications network;
Figure 2 is a block diagram of a mobile station;
Figure 3 illustrates the structure of a linear fixed data file;
Figure 4 illustrates the structure of an ADN data record;
Figure 5 illustrates the contents of a group list file containing directory number group records in accordance with the present invention;
Figure 6 is a flow diagram showing steps taken when sending a short message in accordance with the present invention;
Figure 7 is a flow diagram showing steps taken when editing a directory number group list in accordance with the present invention; and
Figure 8 is a flow diagram illustrating steps taken by the mobile station when an ADN record is deleted.

A GSM network, referred to as a public land mobile network (PLMN), is schematically illustrated in Figure 1. This is in itself known and will not be described in detail. A mobile switching centre (MSC) 2 is connected via communication links to a number of base station controller (BSCs) 4. The BSCs 4 are dispersed geographically across areas served by the mobile switching centre 2. Each BSC 4 controls one or more base transceiver stations (BTSs) 6 located remote from, and connected by further communication links to, the BSC. Each BTS 6 transmits radio signals to, and receives radio signals from, mobile stations 8 which are in an area served by that BTS. That area is referred to as a "cell". A GSM network is provided with a large number of such cells, which are ideally contiguous to provide continuous coverage over the whole network territory.

A mobile switching centre 2 is also connected via communications links to other mobile switching centres in the remainder of the mobile communications network 10, and to a public service telephone network (PSTN), which is not illustrated. The mobile switching centre 2 is provided with a home location register (HLR) 12 which is a database storing subscriber authentication data including the international mobile subscriber identity (IMSI) which is unique to each mobile station 8. The IMSI is also stored in the mobile station in a subscriber identity module (SIM) along with other subscriber-specific information.

The mobile switching centre is also provided with a visitor location register (VLR) 14 which is a database temporarily storing subscriber authentication data for mobile stations active in its area.

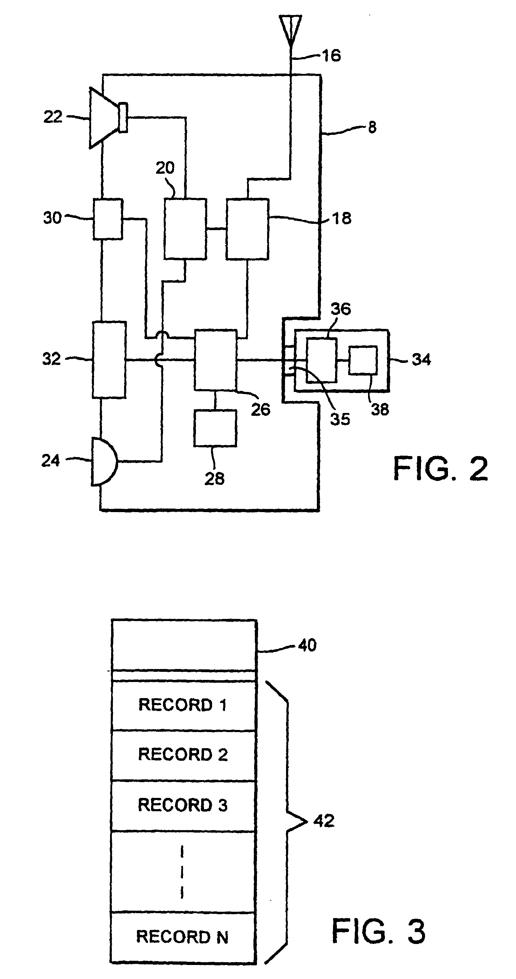

Referring to Figure 2, a mobile station 8 comprises a transmit/receive aerial 16, a radio frequency transceiver 18, a speech coder/decoder 20 connected to a loudspeaker 22 and a microphone 24, a processor circuit 26 and its associated memory 28, an LCD display 30 and a manual input port (keypad) 32. The mobile station is connected to a removable SIM 34 via electrical contacts 35.

The SIM 34 connected to the mobile station has a SIM processor 36, for example a Hitachi H8 microprocessor, and SIM memory 38, which includes for example 16 kilobytes of mask-programmed ROM containing the SIM operating system, 8 kilobytes of read/write EEPROM for the non-volative storage of data items and 256 bytes of scratchpad RAM for use by the SIM processor during operations.

Both the mobile station 8 and the SIM 34 are well known and therefore need not be described in detail herein. A commercially-available SIM is the GemXplore (registered trade mark) SIM card produced by Gemplus, BP 100-13881, Gemenos Cedex-France.

As described above, the SIM 34 is used for the storage and retrieval of data items by the processor 26 of the mobile station 8. The command set, data file structure and data coding format for data communicated via the interface between the mobile station processor 26 and the SIM processor 36 are all specified, in the GSM system, in GSM technical specification 11.11 (ETS 300 536), incorporated herein by reference.

A standard GSM file structure for the storage of data on a SIM, referred to as a linear fixed file structure, is illustrated in Fig. 3. It consists of a header 40 and record space 42. The record space is divided into N fixed length records.

One data record provided in the SIM memory 38 in a conventional SIM 34 is an abbreviated dialling number (ADN) record 44, which forms part of an ADN list file having a linear fixed file structure. Each ADN record 44 has data stored in a fixed length coding format. The record 44 is divided into fixed-length data blocks, each consisting of one or more bytes. A first data block 46, consisting of n bytes, is reserved for directory number identifier data. A second block 48, consisting of one byte, is reserved for data indicating the length of the directory number. A third block 50, consisting of one byte, is reserved for data indicating the type of directory number stored in the record. A fourth block 52, consisting of 8 bytes of memory, is reserved for the directory number data itself. A fifth block 54, consisting of one byte, is reserved for a "capability configuration pointer", indicating the teleservices (e.g. voice call, SMS, fax, etc.) which can be supported by the telephone equipment corresponding to the directory number stored. A final data block 56, consisting of one byte, is an extension record pointer, which indicates the address of an extension record to be accessed in a different data file to give the remainder of a directory number.

In this embodiment of the invention, the mobile station 8 is capable of sending SMS teleservice short messages as defined in GSM Technical Specification 03.40 (ETS 300 608), which is incorporated herein by reference. In the known short message service, a user of the mobile station 8 composes a short message, consisting of alphanumeric characters, and specifies a recipient directory number, by input via the keypad 32. When instructed to by the user, the mobile station then sends a short message signal on a data traffic channel of the radio interface to the fixed portions of the mobile communications network. The short message signal contains data defining the identity of the originating mobile station, data indicating the directory number of the intended recipient, and data within which the short message is coded. When the signal is received by the MSC 2, it forwards it to the SMS service centre 15 for storage and forwarding to the intended recipient.

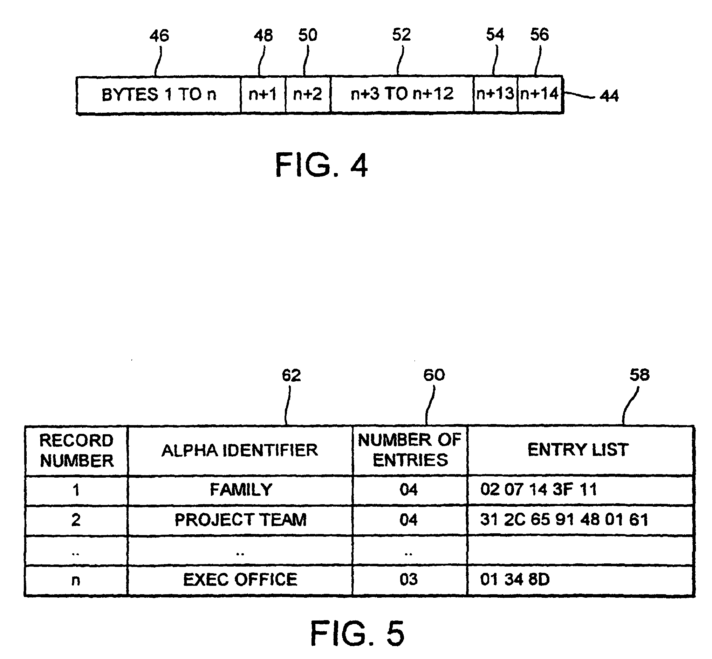

Figure 5 illustrates the contents of a new data record file, referred to herein as a group list file, stored in the SIM memory 38 and used in connection with the SMS teleservice in accordance with the present invention. The group list file contains a number of records 1 to n, each record storing data relating to (i) an entry list 58 containing pointers to records in the ADN list stored in a SIM, namely the record numbers of particular ADN records, and (ii) the number of entries 16 in the entry list 58, and an alphanumeric group identifier 62, such as "Family", "Project Team", etc. as shown. The entry list 58 for each record is selected by the mobile user from entries on the ADN list in the SIM, and the group identifier 62 is defined by the user of the mobile station by keypad input. The group list is stored in the SIM 34 of the mobile station at a predefined address, and records of the group list can be read by the mobile station processor 26 by means of a read command specifying the group list address and the address (record number) of the record in the group list.

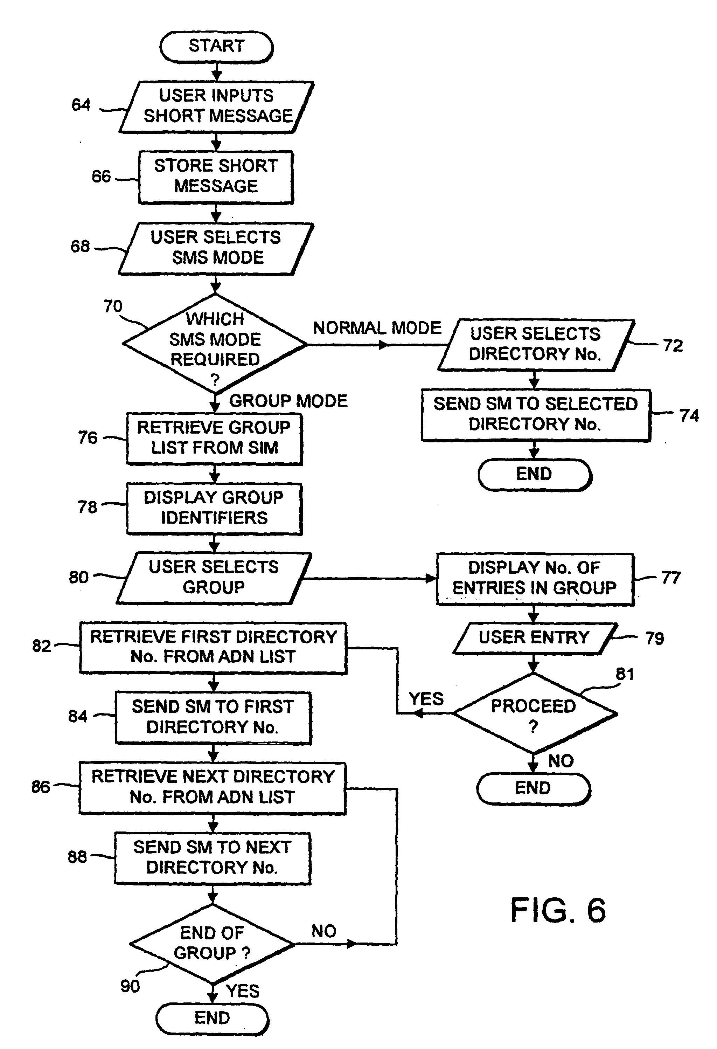

Figure 6 illustrates a procedure for sending SMS signals in this embodiment of the invention, which utilises the group list described above. It allows the user of the mobile station 8 to select either a normal mode, in which a short message is sent to a single selected directory number, or group mode in which a short message is sent to a selected group of directory numbers.

The user first selects the short message service and composes the short message, step 64, which is stored by the mobile station in step 66. Next, the user is prompted to select an SMS mode, which selection is performed by user input in step 68. If the user requires only normal mode, step 70, the user selects the intended recipient's directory number in step 72, and instructs the mobile station to proceed. The mobile station 8 then proceeds to send the short message radio signal, step 74, containing the short message.

If the user requires group mode, step 70, the mobile station retrieves the group list from the SIM 34, by addressing each record in turn, step 76, and displays the group identifier 62 to the user, step 78, on LCD display 30. The user then selects an intended group of recipient directory numbers by keypad input in step 80, to which the mobile station responds by displaying the number of directory number entries in the selected record, step 77. The mobile station may also display the alphanumeric identifiers of each ADN record in the selected group, if required. If the user is satisfied with the selection, by user entry, step 79, the mobile station is instructed to proceed, step 81.

The mobile station now has stored in its memory 28 the short message to be sent and the group record of the selected group. In step 82, the mobile station processor 26 proceeds to read the first entry in the entry list 58 indicating the ADN record number of the first intended recipient directory number. The mobile station processor then reads the corresponding record stored in the ADN list of the mobile station, and retrieves the stored directory number.

The mobile station then proceeds directly to transmit the short message radio signal, containing the short message, in step 84, to the serving BTS 6 for the first directory number, which is indicated in the short message signal.

Once the short message signal has been transmitted in its entirety, the mobile station proceeds to retrieve the directory number from the ADN record having a record number which appears next on the entry list 58 of the group list, in step 86. A short message signal, containing the same short message, is then sent for this next directory number, step 88. This directory number retrieval and short message signal transmission process is repeated until the end of the entry list 58 is reached, in step 90.

Thus, a short message is sent to each of the directory numbers corresponding to the entries in the group record entry list 58 automatically, i.e. without user intervention, in automatically consecutive order, i.e. without requiring the user to select an intended recipient directory number after a short message has been sent to a different intended recipient directory number.

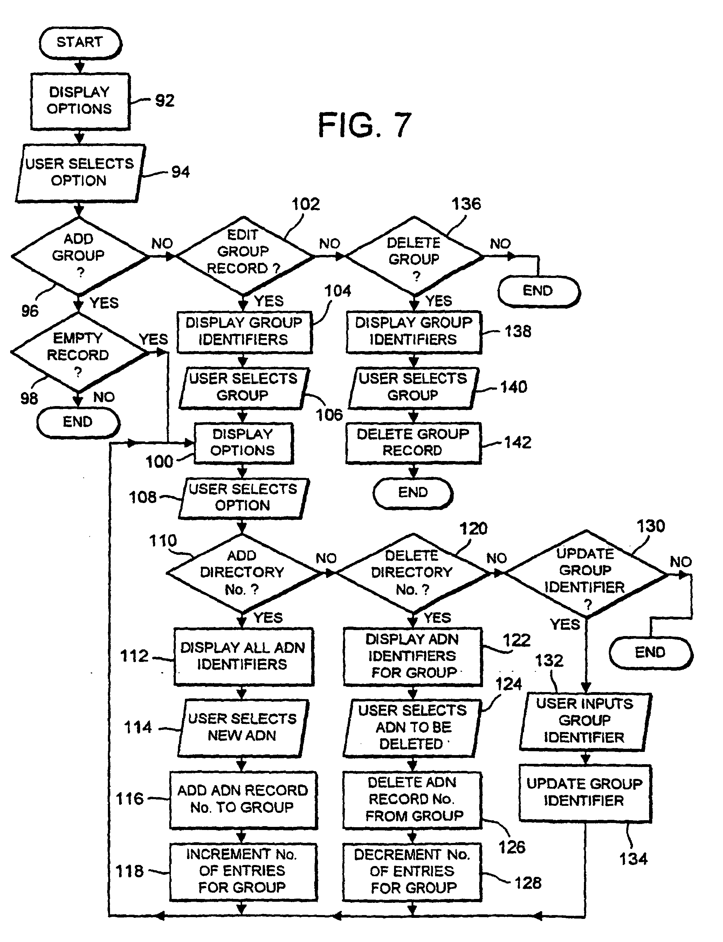

Referring now to Figure 7, the group list can be edited in accordance with a menu facility provided in this embodiment of the invention. When the user enters the group list edit function, the mobile station proceeds to display different options on the LCD display 30, step 92, which the user selects between, step 94, by keypad input.

If the user chooses to add a group record, step 96, to the group list, the mobile station checks, step 98, if a record is available. If not, the edit facility ends. If a group record is available, the mobile station proceeds to display options for editing the selected empty group record, step 100.

If the user selects in step 94 to edit a group record, step 102, the mobile station 8 displays all of the group identifiers for the current group records in the group list, step 104. The user then selects one of the group records by means of the group identifier, step 106, and the mobile station then proceeds to display further options, step 100, which the user selects between by keypad input in step 108.

If the user wishes to add a directory number to the entry list for the selected group record, step 110, the mobile station proceeds to display all of the ADN identifiers appearing in the ADN list stored in the mobile station SIM 34, step 112. From these ADN identifiers, the user selects the chosen ADN to be added to the group record, step 114. The mobile station then proceeds to add the ADN record number of the selected ADN record to the group entry list 58, in step 116. Next, the value of the number of entries 60 for the group is incremented to reflect the added record number entry, step 118. The procedure then moves back to step 100, in which the options for editing the selected group are again displayed.

If the user selects in step 108 to delete a directory number from the entry list of the selected group, step 120, the mobile station proceeds to display each of the ADN identifiers for the ADN record indicated in the group entry list 58, step 122. The user then selects which of the group's directory numbers is to be deleted, step 124, by means of the ADN identifiers. The mobile station then proceeds to delete the selected ADN record number from the group entry list 58, step 126, shifting the remaining entries if required to defragment the entry list. Next, the mobile station decrements the number of entries datum 60 to reflect the reduced number of entries in the entry list 58, step 128. The procedure then moves back to step 100, in which the group edits options are displayed again.

If in step 108 the user selects the option to update the group identifier 62, the user is prompted to input the new group identifier, step 132. The mobile station then updates the group identifier data for the record, step 134, and returns to step 100.

If in step 94 the user selects the option to delete a group from the group list, step 136, the mobile station proceeds to display each of the group identifiers occurring in the group list, 138. From these, the user selects a group record to be deleted, 140, which the mobile station proceeds to delete in step 142. That group record then becomes available for the storage of a further group list.

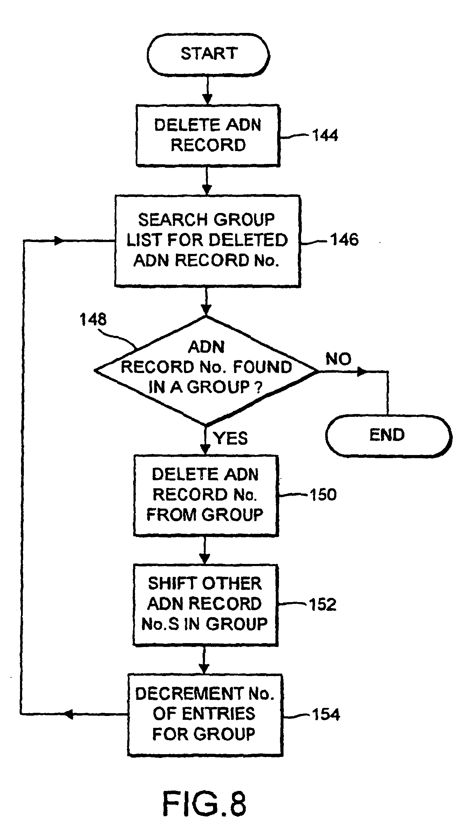

Referring now to Figure 8, there is also provided in this embodiment a procedure whereby, if an ADN record is deleted from the ADN record list, the group list stored on the SIM is updated. When an ADN record is deleted by input from the user or otherwise, step 144, the mobile station performs a search through the entry lists 58 of each group record in the group list, for the record number of the deleted ADN record, step 146.

If the ADN record number is found in a group, step 148, it is deleted from the entry list of the group in which that ADN record is found, step 150, and the remaining entries in the entry list 58 are shifted, to reduce any fragmentation of the entry list caused by the deletion of an entry.

Next, the mobile station proceeds to update the number of entries datum 60 by decrementing the value stored to reflect the deletion of an entry from the entry list 58. The search procedure is re-initiated, returning to step 146, until no further instance is found of the deleted ADN record number occurring in the group list.

### Other Embodiments

In the above embodiment, the mobile station automatically sends each SMS signal without requiring intervening user input after the mobile station is instructed to proceed to send the SMS signals.

In some cases it may however be preferred to allow the user to enter an instruction to continue in the time after one SMS signal has been sent and before the following SMS signal is sent. The mobile station would signal, for example audibly, to the user when the first SMS signal has been sent successfully, to prompt the user for a continue command, which may be input for example via the keypad of the mobile station. A continue command could be required after each SMS signal is sent, or intermittently after a set number of signals has been sent.

In the above embodiment, the mobile station is a GSM-compatible mobile station, having a SIM. However, the invention could be implemented in relation to a mobile station used in other mobile communications systems, such as CDMA, PDH and third generation systems. References to GSM include other standards for which at least some features are set by the GSM technical specifications such as the PCN standard and the DCS 1800 standard.

The group list data need not be stored on a removable data store, such as a SIM, but could be stored in another memory element provided in the mobile station.

In the first described embodiment, the group list records contain the record numbers of the ADN records containing the recipient directory numbers for the group. In an alternative embodiment, each group list record contains the recipient directory numbers for the group in full. An ADN list can then be assembled from the superset of entries in each of the group list and/or a supplemental ADN list.

Furthermore, the mode of selection of the directory numbers in a group is not limited to the selection of a pre-stored group of directory numbers. In a further embodiment, after the user has composed the short message, the user would be presented with the ADN list record identifiers, from which the user could select each ADN record to be included in the selected group by keypad input. The mobile station would, in response to a command from the user, then send an SMS signal for each member of the selected group in an automatically consecutive order.

In the first described embodiment, the group messaging procedure is directed by the mobile station processor, the SIM playing a passive role. In an alternative embodiment, the procedure could be implemented entirely by commands sent by the SIM processor to the mobile station processor. Thus, the SIM processor would instruct the mobile station processor to offer a group messaging menu facility, the menu facility prompts being sent from the SIM to the mobile station. Once a group SMS signalling procedure is confirmed by the user, the SIM processor would instruct the mobile station processor to send an SMS signal to each of the recipient directory numbers in turn. An advantage of this alternative embodiment is that a group messaging feature can be provided without the need for modification of the mobile station. All that is required is a mobile station which accepts the appropriate control signals sent by the SIM processor.

It is also envisaged that various modifications and variations to the above described embodiments could be made, without falling outside the scope of the present invention which is defined in the appended claims.

## Claims

1. A mobile station (8) for use in a mobile communications system (2, 4, 6, 10, 12, 14, 15), said mobile station comprising a memory (38) for storing a plurality of recipient addresses and a message to be sent from the mobile station (8),
**characterised in that** said mobile station (8) comprises a menu facility for selecting (80) a group of recipient addresses from said plurality of recipient addresses, and for sending (84, 88) separate short messages for each member of said selected group, said short messages each containing the same message stored in said memory.

2. A mobile station (8) according to claim 1, wherein the mobile station is arranged to send said short messages (84, 88) automatically, in consecutive order.

3. A mobile station (8) according to any preceding claim, wherein the mobile station is arranged to send each of said short messages automatically (88) without requiring intervening user input after the first of said short messages is sent (84).

4. A mobile station (8) according to any preceding claim, wherein said memory (38) is for storing a plurality of predetermined groups of recipient addresses.

5. A mobile station (8) according to any preceding claim, wherein said memory (38) is arranged to store data (62) for presenting a group identifier in the form of an alphanumeric character string previously specified by a user, whereby to perform said selection.

6. A mobile station (8) according to claim 5, further comprising:
a group edit menu facility for allowing a user to create (96) groups of recipient addresses; and
means for storing group data relating to said groups, said group data including, for each said group, said group identifier (62) which is specified by the user.

7. A mobile station (8) according to claim 6, wherein said group identifier (62) is an alphanumeric character string.

8. A mobile station (8) according to claim 6 or claim 7, wherein said group edit menu facility allows a user to create (96) one of said groups by selecting (114) recipient addresses from said list of recipient addresses stored in said memory (38).

9. A mobile station (8) according to claim 8, wherein, for a particular group, said group data comprises pointers (58) to each of the recipient addresses in the group, in said list.

10. A mobile station (8) according to claim 8 or 9, wherein recipient addresses are deletable from said list, further comprising means for searching (146) and revising (150, 152, 154) said group data relating to a deleted recipient address in response to the deletion (144).

11. A mobile station (8) according to any one of claims 6 to 10, wherein said group data is stored in a removable data store (34), such as a SIM.

12. A mobile station (8) according to claim 11, wherein said removable data store (34) comprises a processor (36) and said group menu facility is implemented by commands sent by said processor (36) to the mobile station (8).

13. A mobile station (8) according to any preceding claim, wherein said memory is a removable data store (34), such as a SIM.

14. A mobile station (8) according to any preceding claim, wherein said menu facility is arranged to present (77) the number (60) of recipient's addresses in a group to the user.

## Patentansprüche

1. Mobilstation (8) zur Verwendung in einem Mobilkommunikationssystem (2, 4, 6, 10, 12, 14, 15), wobei die Mobilstation einen Speicher (38) zum Speichern mehrerer Empfängeradressen und einer von der Mobilstation (8) zu sendenden Nachricht umfasst,
**dadurch gekennzeichnet, dass**
die Mobilstation (8) eine Menüeinrichtung zum Auswählen (80) einer Gruppe von Empfängeradressen aus den mehreren Empfängeradressen und zum Senden (84, 88) gesonderter Kurznachrichten für jedes Mitglied der ausgewählten Gruppe umfasst, wobei die Kurznachrichten jeweils die gleiche im Speicher gespeicherte Nachricht enthalten.

2. Mobilstation (8) nach Anspruch 1, wobei die Mobilstation dazu eingerichtet ist, die Kurznachrichten (84, 88) automatisch in einer fortlaufenden Reihenfolge zu senden.

3. Mobilstation (8) nach einem der vorhergehenden Ansprüche, wobei die Mobilstation dazu eingerichtet ist, jede der kurzen Nachrichten automatisch (88) zu senden, ohne eine eingreifende Benutzereingabe zu benötigen, nachdem die erste der kurzen Nachrichten gesendet ist (84).

4. Mobilstation (8) nach einem der vorhergehenden Ansprüche, wobei der Speicher (38) zum Speichern mehrerer vorherbestimmter Gruppen von Empfängeradressen dient.

5. Mobilstation (8) nach einem der vorhergehenden Ansprüche, wobei der Speicher (38) dazu eingerichtet ist, Daten (62) zum Darstellen einer Gruppenkennung in der Form einer zuvor durch den Benutzer bestimmten alphanumerischen Zeichenfolge zu speichern, wodurch die Auswahl durchzuführen ist.

6. Mobilstation (8) nach Anspruch 5, ferner umfassend
eine Gruppenbearbeitungsmenüeinrichtung, um einem Benutzer zu gestatten, Gruppen von Empfängeradressen (96) zu schaffen; und
ein Mittel zum Speichern von Gruppendaten, die sich auf diese Gruppen beziehen, wobei die Gruppendaten für jede der Gruppen die Gruppenkennung (62) beinhalten, die durch den Benutzer bestimmt ist.

7. Mobilstation (8) nach Anspruch 6, wobei die Gruppenkennung (62) eine alphanumerische Zeichenfolge ist.

8. Mobilstation (8) nach Anspruch 6 oder 7, wobei die Gruppenbearbeitungsmenüeinrichtung einem Benutzer gestattet, durch Auswählen (114) von Empfängeradressen aus der im Speicher (38) gespeicherten Liste von Empfängeradressen eine der Gruppen zu schaffen (96).

9. Mobilstation (8) nach Anspruch 8, wobei die Gruppendaten in der Liste für eine bestimmte Gruppe Zeiger (58) zu jeder der Empfängeradressen in der Gruppe umfassen.

10. Mobilstation (8) nach Anspruch 8 oder 9, wobei Empfängeradressen aus der Liste löschbar sind, ferner umfassend ein Mittel zum Suchen (146) und Überarbeiten (150, 152, 154) der Gruppendaten, die sich auf eine gelöschte Empfängeradresse beziehen, als Reaktion auf das Löschen (144).

11. Mobilstation (8) nach einem der Ansprüche 6 bis 10, wobei die Gruppendaten in einem auswechselbaren Datenspeicher (34) wie etwa einer SIM-Karte gespeichert sind.

12. Mobilstation (8) nach Anspruch 11, wobei der auswechselbare Datenspeicher (34) einen Prozessor (36) umfasst, und die Gruppenmenüeinrichtung durch Befehle eingerichtet ist, welche durch den Prozessor (36) zur Mobilstation (8) gesendet werden.

13. Mobilstation (8) nach einem der vorhergehenden Ansprüche, wobei der Speicher ein auswechselbarer Datenspeicher (34) wie etwa eine SIM-Karte ist.

14. Mobilstation (8) nach einem der vorhergehenden Ansprüche, wobei die Menüeinrichtung eingerichtet ist, um dem Benutzer die Anzahl (60) der Empfängeradressen in einer Gruppe darzustellen (77).

## Revendications

1. Station mobile (8) destinée à être utilisée dans un système de communications mobile (2, 4, 6, 10, 12, 14, 15), ladite station mobile comprenant une mémoire (38) pour stocker une pluralité d'adresses de destinataires et un message devant être envoyé depuis la station mobile (8),
**caractérisée en ce que** ladite station mobile (8) comprend un système de menus pour sélectionner (80) un groupe d'adresses de destinataires parmi une pluralité d'adresses de destinataires, et pour envoyer (84, 88) des messages courts distincts pour chaque membre dudit groupe sélectionné, lesdits messages courts contenant chacun le même message stocké dans ladite mémoire.

2. Station mobile (8) selon la revendication 1, dans laquelle la station mobile est conçue pour envoyer automatiquement lesdits messages courts (84, 88) et dans un ordre consécutif.

3. Station mobile (8) selon l'une quelconque des revendications précédentes, dans laquelle la station mobile est conçue pour envoyer automatiquement chacun desdits messages courts (88) sans nécessiter d'entrée d'un utilisateur intervenant que le premier desdits messages courts a été envoyé (84).

4. Station mobile (8) selon l'une quelconque des revendications précédentes, dans laquelle ladite mémoire (38) est destinée à stocker une pluralité de groupes prédéterminés d'adresses de destinataires.

5. Station mobile (8) selon l'une quelconque des revendications précédentes, dans laquelle ladite mémoire (38) est conçue pour stocker des données (62) pour présenter un identificateur de groupe sous la forme d'une chaîne de caractères alphanumériques précédemment spécifiée par un utilisateur, afin d'effectuer ladite sélection.

6. Station mobile (8) selon la revendication 5, comprenant en outre :
un système de menus de modification de groupes permettant à un utilisateur de créer (96) des groupes d'adresses de destinataires ; et
un moyen pour stocker des données de groupes concernant lesdits groupes, lesdites données de groupes comprenant, pour chacun desdits groupes, ledit identificateur de groupe (62) qui est spécifié par l'utilisateur.

7. Station mobile (8) selon la revendication 6, dans laquelle ledit identificateur de groupe (62) est une chaîne de caractères alphanumériques.

8. Station mobile (8) selon la revendication 6 ou 7, dans laquelle ledit système de menus de modification de groupes permet à un utilisateur de créer (96) l'un desdits groupes en sélectionnant (114) des adresses de destinataires dans ladite liste d'adresses de destinataires stockées dans ladite mémoire (38).

9. Station mobile (8) selon la revendication 8, dans laquelle, pour un groupe particulier, lesdites données de groupes comprennent des pointeurs (58) pointant sur chacune des adresses de destinataires du groupe, dans ladite liste.

10. Station mobile (8) selon la revendication 8 ou 9, dans laquelle des adresses de destinataires peuvent être effacées de ladite liste, comprenant en outre des moyens pour effectuer une recherche (146) et une révision (150, 152, 154) dans lesdites données de groupes concernant une adresse de destinataire effacée en réponse à l'effacement (144).

11. Station mobile (8) selon l'une quelconque des revendications 6 à- 10, dans laquelle lesdites données de groupes sont stockées dans un module de mémoire de données amovible (34), tel qu'un module SIM (module d'identification d'abonné).

12. Station mobile (8) selon la revendication 11, dans laquelle ledit module de mémoire de données amovible (34) comprend un processeur (36) et ledit système de menus de groupes est mis en oeuvre par des ordres envoyés par ledit processeur (36) à la station mobile (8).

13. Station mobile (8) selon l'une quelconque des revendications précédentes, dans laquelle ladite mémoire est un module de mémoire de données amovible (34), tel qu'un module SIM.

14. Station mobile (8) selon l'une quelconque des revendications précédentes, dans laquelle ledit système de menus est conçu pour présenter (77) à l'utilisateur le nombre (60) d'adresses de destinataires dans un groupe.
